# EUROPEAN PATENT APPLICATION

(11) **EP 2 993 107 A2**
(43) Date of publication of application: **09.03.2016**
(21) Application number: 15184132.7
(22) Date of filing: 07.09.2015
(51) Int. Cl.: B62B 9/10

(54) **A SUPPORT**

(30) Priority: 08.09.2014 GB 201415844
(71) Applicant: Tippitoes Limited, GY1 2BH St. Peter Port (GG)
(72) Inventor: WOLFF, Melvyn Harold, Chorley, Lancashire PR7 4JL (GB)
(74) Representative: WP Thompson

(57) **Abstract**

A support (10) for use with a stroller (30). The support (10) is deformable between a retracted position and an extended position and is resiliently deformable so as to be movable between each of the retracted and extended positions.

## Description

The present application relates to a support for a stroller.

Strollers are known in the art for transporting children and infants. In general, strollers comprise a seat portion arranged to hold and support a child during use of the stroller. Many strollers are also collapsible for convenience and ease of transportation when the stroller is not in use.

Some strollers provide seat configurations that can accommodate various sizes and/or ages of children. Strollers and stroller seats may also comprise a support, for example, connected to a front edge of the stroller seat. In general, the support provides a support surface between the stroller seat and a foot rest of the stroller, to provide comfort to the child when the stroller is in use. The support may be particularly beneficial to the child where the child's feet cannot yet reach the foot rest. In some strollers, the support may articulate at the front edge of the seat portion, so as to support the child's legs at a variety of angles, with the aim of improving comfort for the child during use of the stroller. For example, the support may articulate so as to support the child's legs both when the child is seated in the stroller or when the back support is reclined which allows the child to lie flat for sleeping.

The support, as well as other components of the stroller, may limit the extent to which the stroller can be collapsed for storage and transportation. Furthermore, the support may become cumbersome or unnecessary, for example, when the child has grown to an extent wherein their feet can reach the foot rest.

It is an object of the present invention to overcome or alleviate the problems associated with the prior art.

In accordance with a first aspect of the invention, there is provided a support for use with a stroller, the support being deformable between a retracted position and an extended position, wherein the support is resiliently deformable so as to be deformable between each of the retracted and extended positions

The provision of a retractable support enables the stroller configuration to be adapted to suit various sizes and/or ages of child by providing a support which can be extended when required and retracted when no longer necessary.

The invention also enables the support to be easily deformed when the stroller is collapsed, thus potentially enabling the stroller to be collapsed into a smaller unit as compared to known arrangements comprising rigid and/or non-retractable supports.

The support may comprise a resiliently deformable member, arranged on the stroller so as to bias the support towards the extended position, whilst allowing the deformable member to be deformed so that the support can be retained in a retracted position. For example, the resiliently deformable member may be attached at each end to each side of the stroller frame, so as to create a parabolic or U-shaped profile extending from the forward edge of the stroller.

The resiliently deformable member may be retained in the retracted position by retaining means located on the stroller. For example, the retaining means may comprise a closable pocket located within or underneath the seat portion of the stroller. The pocket may be closed by one or more zip fasteners, or one or more hook and loop fasteners. In another embodiment, the retaining means may comprise an adjustable strap fastener, arranged to secure the retracted deformable member to the stroller.

The support may be biased towards the extended position and may be deformed towards the retracted position in response to a pushing force applied to a part of the support, for example, the central portion of the resiliently deformable member located within the support.

The resiliently deformable member may comprise plastics.

The resiliently deformable member may comprise metals, for example, such as spring steel.

The support may comprise one or more stroller attachment means for releasably attaching the support to a stroller.

This allows the support to be removed entirely from the stroller and also may enable the support to be retrofitted to a stroller.

The one or more stroller attachment means may be located at one or more ends of the resiliently deformable member.

The one or more stroller attachment means may be connected to an articulating connector attached to the stroller, to allow the support to be articulated in an upward direction, away from the foot rest, or in a downward direction, towards the foot rest.

The resiliently deformable member may be substantially parabolic or U-shaped when attached to the stroller, and may be configured to bridge the stroller frame at either side of the seat portion, such that the resiliently deformable member is biased away from the seat portion so as to form a parabolic or U-shape in front of the forward end of the seat portion.

The support may further comprise a cover extending over at least the resiliently deformable member for providing a substantially continuous surface between a seat of the stroller and the resiliently deformable member.

The cover may comprise fabric. The fabric may be a ripstop fabric.

The cover may include a padding layer of open-celled polymeric foam, or wadding, or combustion modified foam.

The support may be attached to a seat cover of the stroller.

The support may be a lower leg and foot support or headrest.

The support may be stowed within the seat of the stroller.

The support may be capable of being stowed underneath the seat of the stroller.

In accordance with a second aspect of the invention, there is provided a stroller comprising a support, wherein the support is deformable between a retracted position and an extended position.

The stroller may comprise a support in accordance with the first aspect of the invention.

The support may be attached to a seat cover of the stroller.

The support may be capable of being stowed within a seat of the stroller, or underneath a seat of the stroller.

In accordance with a third aspect of the invention, there is provided a support for use with a stroller, the support comprising frame means and flexible panel means supported by the frame means, the frame means being connectable to the stroller and the frame means being deformable between an extended position in which the panel means is deployed and a retracted position in which the panel means is collapsed.

It is believed that a support for a stroller in accordance with the present invention at least addresses the problems outlined above. The advantages of the present invention are that a support for a stroller is provided which supports a child's legs at a variety of seat angles, and improves comfort for the child during use of the stroller. Advantageously, the support does not limit the extent to which the stroller can be collapsed for storage and transportation. Furthermore, as the support is resiliently biased between the extended and retracted positions it can be operated quickly and easily, even when the child is seated on the stroller.

It will be obvious to those skilled in the art that variations of the present invention are possible and it is intended that the present invention may be used other than as specifically described herein.

Specific non-limiting embodiments of the present invention will now be described by way of example only and with reference to the accompanying drawings, in which:
Fig. 1 shows a side perspective view of a covered support in accordance with the present invention, detached from a stroller;
Fig. 2a shows a side perspective view of the support of Fig. 1, with the cover removed to show the resiliently deformable member biased towards an extended position;
Fig. 2b shows the resiliently deformable member of Fig. 2a deformed into a retracted position, in response to a pushing force, represented by arrow A.
Fig. 3a shows the support of Fig. 1 in the extended position and attached to a stroller frame;
Fig. 3b shows the support of Fig. 3a deformed into the retracted position and retained within the seat of the stroller;
Fig. 4a shows the support of Fig. 3a, in the extended position and attached to a stroller comprising an articulating connector which connects the support to the stroller so that the angle of the support can be adjusted;
Fig. 4b shows the support and stroller of Fig. 4a, with the support deformed into a retracted position and retained within the seat portion of the stroller.
Fig. 5a shows the support and stroller of Fig. 4a when the stroller is in a collapsed configuration, showing how the support can remain attached to the stroller when it has been collapsed, such as for storage or transportation; and
Fig. 5b shows the support and stroller of Fig. 5a with the support in a retracted position, again showing how the support can remain attached to the stroller when it has been collapsed.

The drawings illustrate a support 10 which is attachable to a stroller 30.

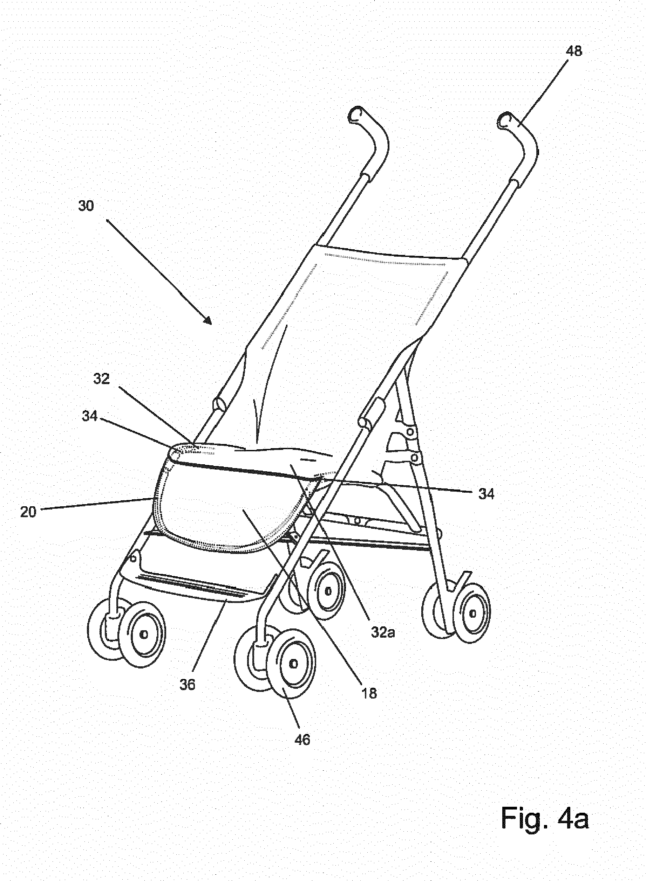

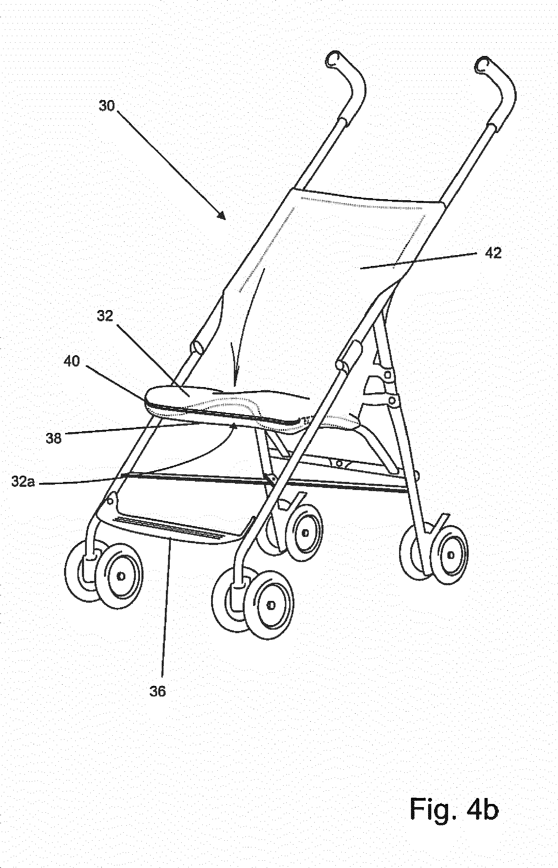

The support 10 of the present invention is intended to be used with any number of strollers 30 that are available in the art. Such strollers 30 are generally intended to be used for transporting infants and small children in a seated position, facing forwards. As best shown in Figs. 4a and 4b, the support 10 of the present invention is intended to be used with a stroller 30 which comprises a collapsible stroller frame 44 on which a fabric seat 32 with a seat back rest 42 is attached. The stroller frame 44 also comprises wheels 46 and handles 48. The skilled person will appreciate that many of the features of stroller 30 have omitted for the purposes of clarity only. The stroller 30 would also generally include a harness for securing the child and a brake mechanism, and include other additional features such as a canopy or shade, under-seat cargo storage, a reclining seat mechanism, tray table etc.

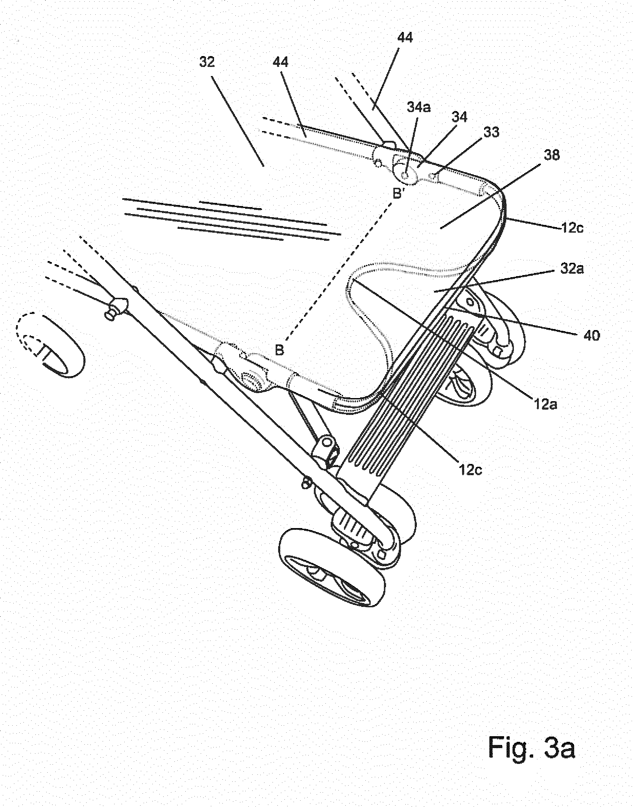

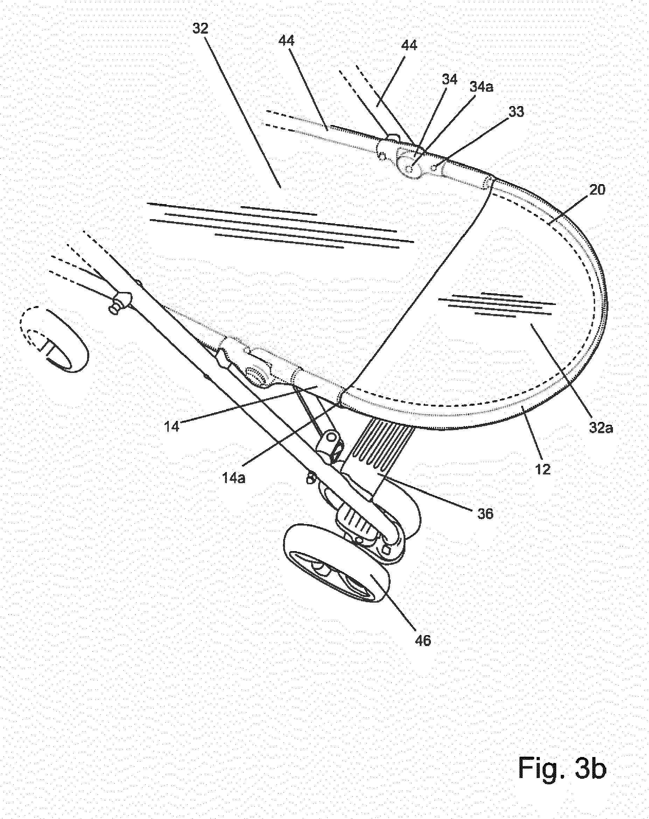

The support 10 of the present invention comprises an elongate resiliently deformable elongate flat band 12 of spring steel enclosed within a fabric cover 18. The support can be attached to the stroller 30 by attachment lugs 14 which are located at each end of the resiliently deformable elongate flat band 12 and which are received, in use, in sockets 34 which are pivotally mounted to the stroller frame 44, as best illustrated in Figs. 3a and 3b. The band 12 is straight in its undeformed condition and is resiliently deformed to allow it to be enclosed within the cover 18.

The cover has an inner straight edge 18a and an outer parabolic peripheral edge 18b and comprises two sheets of fabric sewn to one another around their periphery, except at the extremities of the inner straight edge 18a, where the attachment lugs 14 are allowed to project out beyond the cover 18. A further line of stitching 20, spaced from the parabolic periphery edge 18b by a short distance, defines a conduit 18c adjacent to the curved edge of the fabric, in which the spring steel band 12 is received.

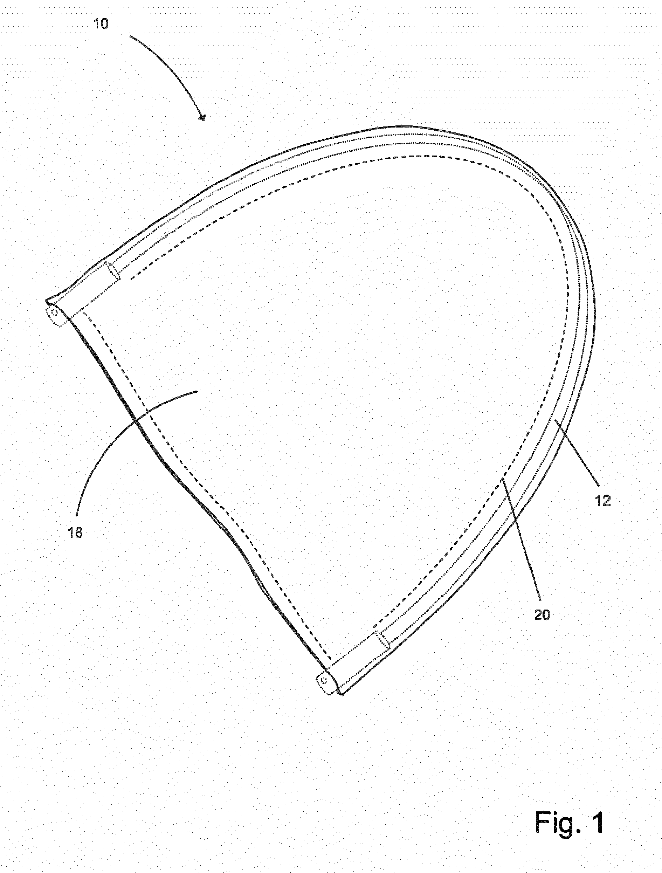

The support 10 can be manipulated between a first, deployed or extended condition shown in Figs 1, 3b and 4 in which it projects forwardly of the lower edge of the fabric seat 32, and a second, stowed or retracted condition shown in Figs 3a and 4b in which it is received in a pocket 38 in the lower edge of the fabric seat 32.

In the deployed or extended condition, the elongate resiliently deformable steel band 12 urges the fabric cover 18 outwardly and holds the cover 18 in its fully extended position, as the resiliency of the band 12 causes it to urge the fabric cover outwardly as the band attempts to resume its undeformed, straight shape.

In the stowed or retracted condition, the apex of the bent steel band 12 is pushed inwardly, which causes it to assume a rounded M-shape. Since the band 12 is constrained within the conduit 18c adjacent to the curved portion of the periphery 18b, inward deformation of the band 12 also results in the fabric cover 18 being drawn in, allowing the collapsed support 10 to be received in the pocket 38 in the fabric seat 32.

The resilient nature of the band 12, allows it to return to its original form after it is bent or twisted, and enables it to withstand repeated flexing between the retracted and extended positions, respectively, over the lifetime of the support 10.

As illustrated in Figs. 3b and 4a, when in the deployed or extended position, the fabric cover 18 provides a support surface for the child's lower legs, thus making use of the stroller 30 and support 10 more comfortable. The fabric cover 18 enclosing the support 10 can be the same, or different, to the fabric forming the fabric seat 32 and seat back rest 42.

Each of the attachment lugs 14 comprises an aperture 16 which meets with a corresponding detent 33 inside the receiving socket 34 to secure the support 10 to the stroller 30.

In the embodiment of the invention shown in the drawings, the receiving sockets 34 are pivotally mounted onto the stroller frame 44 by means of an articulating connector 34a, to allow the support 10 to be raised away from the foot rest 36 and lowered towards the foot rest 36, respectively, as required. This enables the child's lower leg to be supported by the support 10 at various seat angles, thus improving comfort during use of the stroller 30.

In a modification, the receiving sockets 34 are fixed and extend forwardly from the ends of the stroller frame 44.

When attached to the stroller 30, the resiliently deformable member 12 is naturally biased towards an extended position, forming a parabolic, or U-shape between and in the same plane as the stroller attachment means 14. The resiliently deformable member 12 extends forwards, away from a forward facing edge 32a of the stroller seat 32 to define a support 10 having a fabric covering 18. In the extended position, as shown in Fig. 3a, the support 10, can act as a support for supporting the lower leg and foot of the child. This is particularly useful when the seat back rest 42 of the stroller 30 is reclined and which allows children and infants to lie in generally flat, supported and comfortable positon. Although not shown in the drawings, the support 10 can also include a padding layer for comfort. The padding layer being provided by an open-celled polymeric foam, or wadding, or combustion modified foam. The skilled person will appreciate that the support 10 can also be configured to extend from, for example, the top of the seat back rest 42 to act as a headrest.

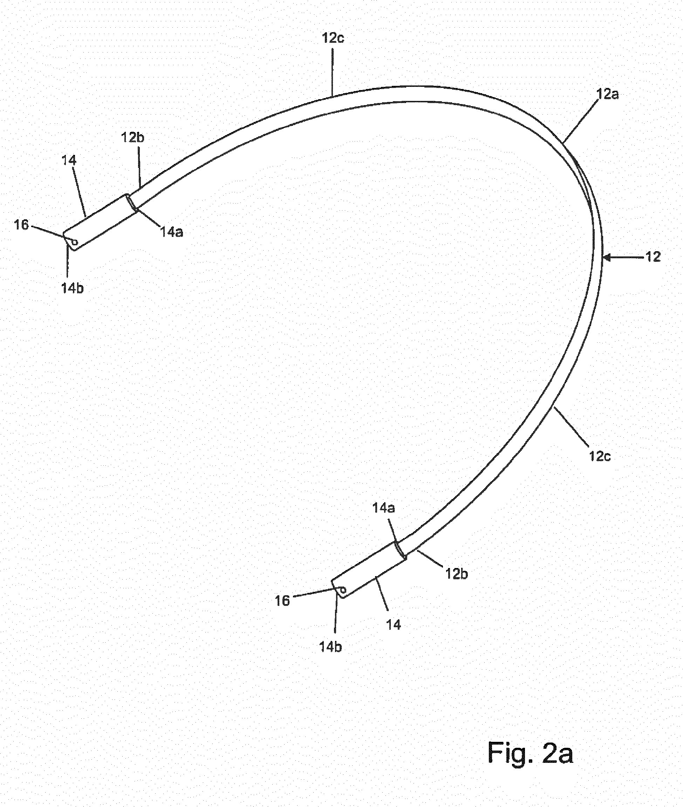

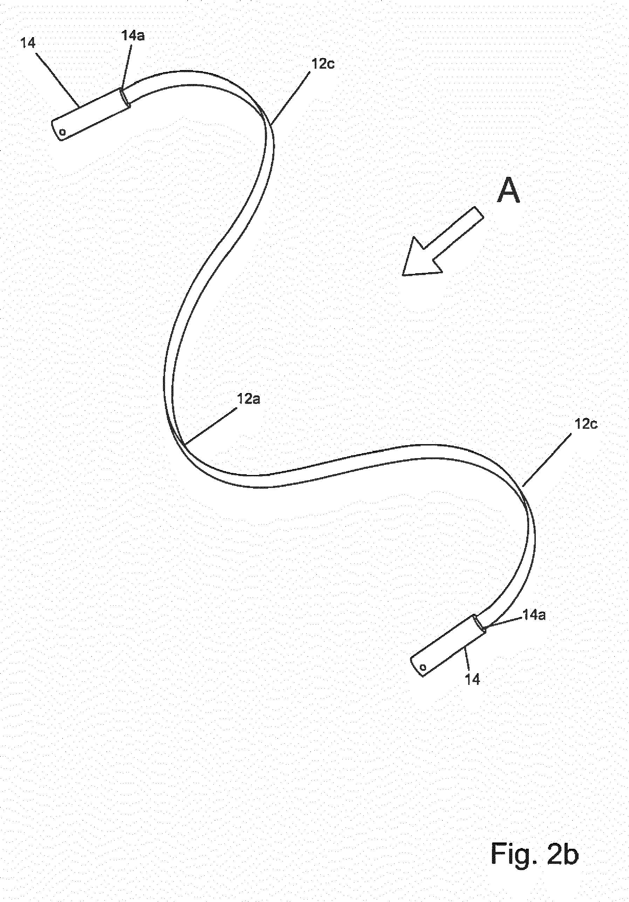

When a central portion 12a of the resiliently deformable band 12 is pushed back towards the forward facing edge 32a and further towards the rear part of the stroller seat 32, the resiliently deformable member 12 moves into a retracted position, forming a rounded M-shape between the stroller attachment means 14, as best illustrated in Fig 2b. This inwardly directed flex forms the retracted position of the resiliently deformable band 12. The resiliently deformable member 12 can then be secured in the retracted position.

The resiliently deformable band 12 is pushed back sufficiently to contain it within the storage pouch or pocket 38 underneath, or formed integrally with, the seat portion 32. The storage pocket 38 is best shown in Fig. 3b and is formed as a generally rectangular-shaped opening defined by the sides of the seat portion 32, the opening in the front facing edge 32a of the seat portion 32 and along the dotted line between B and B' in Fig. 3b.

Once located within the storage pocket 38, the storage pocket 38 is closed using a zip fastener 40 to retain the resiliently deformable band 12 in the retracted configuration. The skilled person will appreciate that other fastenings could be used to secure the resiliently deformable band 12 in the retracted configuration, such as, for example, press stud fasteners, hook and loop fasteners, and buttons.

When the zip fastener 40 is unzipped, the support 10 is released from the storage pocket 38 and naturally biases towards an extended position, ready for use. Since the resiliently deformable member 12 is securely stitched to the support cover 18, the whole support 10, including cover 18 is drawn forwards as the resiliently deformable member 12 biases forward, away from the forward facing edge 32a of the seat portion 32.

In use, the support 10 may be retained in the retracted configuration within the storage pocket 38, as described above. In this arrangement, approximately each distal third 12c of the resiliently deformable band 12 abuts the interior of the zip fastener 20, since the resiliently deformable band 12 is prone to naturally biasing towards an extended configuration.

When the support 10 is required, the zip fastener 20 of the storage pocket 38 is fully opened, which allows the resiliently deformable band 12 to naturally bias outwards and away from the forward facing edge 32a of the seat portion 32, into an extended configuration. This returns the support 10 to its original parabolic or U-shaped extended configuration.

When the support 10 is no longer required, it is pushed back into the storage pocket 38 and the zip fastener 20 closed, as previously described, to securely retain the support 10 until subsequently required.

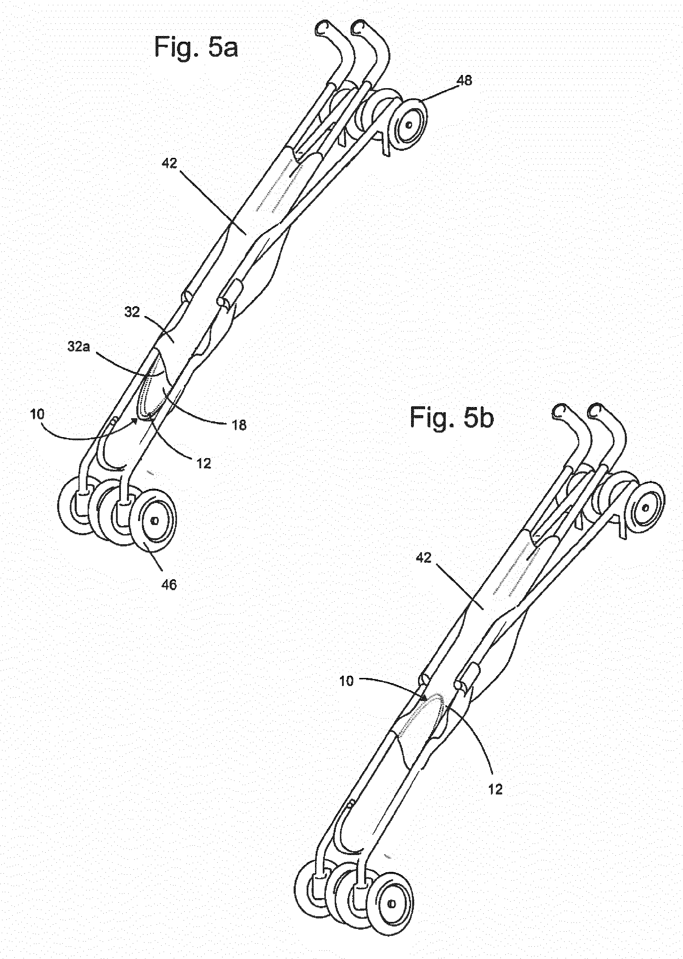

As can be seen from Figs. 5a and 5b, the support 10 does not interfere with collapsing of the stroller 30, as would occur with a rigid support.

The invention is not restricted to the details of the foregoing embodiment. Various alterations and modifications may be made to the present invention without departing from the scope of the invention. For example, although particular embodiments refer to implementing the present invention on a stroller, this is in no way intended to be limiting as, in use, the present invention could be implemented in any form of collapsible wheeled transport and/or camping furniture and equipment.

## Claims

1. A support for use with a stroller, the support being deformable between a retracted position and an extended position wherein the support is resiliently deformable so as to be movable between each of the retracted and extended positions.

2. A support as claimed in claim 1, wherein the support comprises a resiliently deformable member for moving the support towards each of the retracted and extended positions.

3. A support as claimed in claim 1 or claim 2, wherein the support is biased toward the extended position and deformable towards a retracted position.

4. A support as claimed in claim 2 or claim 3, wherein the resiliently deformable member comprises plastics or metal, optionally spring steel.

5. A support as claimed in any of claims 1 to 4, comprising one or more stroller attachment means for releasably attaching the support to a stroller, the one or more stroller attachment means optionally located at one or more ends of the resiliently deformable member.

6. A support as claimed in any of claims 1 to 5, wherein the resiliently deformable member is elongate and attachable to the stroller at each end.

7. A support as claimed in any of claims 1 to 6, further comprising a cover extending over at least the deformable member for providing a substantially continuous surface between a seat of the stroller and the deformable member wherein optionally the cover comprises fabric, e.g. a ripstop fabric.

8. A support as claimed in claim 7, wherein the cover includes a padding layer of open-celled polymeric foam, or wadding, or combustion modified foam.

9. A support as claimed in any preceding claim, wherein the support is attached to a seat cover of the stroller and optionally, wherein the support is a lower leg and foot support or headrest.

10. A support as claimed in any preceding claim, wherein the support can be stowed within the seat of the stroller or underneath the seat of the stroller.

11. A support for use with a stroller, the support comprising frame means and flexible panel means supported by the frame means, the frame means being connectable to the stroller and the frame means being deformable between an extended position in which the panel means is deployed and a retracted position in which the panel means is collapsed.

12. A stroller comprising a support, wherein the support is deformable between a retracted position and an extended position.

13. A stroller comprising a support in accordance with any preceding claim.

14. A stroller as claimed in claim 12 or claim 13, wherein the support is attached to a seat cover of the stroller and, optionally wherein the support can be stowed within a seat of the stroller or underneath a seat of the stroller.

15. A computer-readable medium having computer-executable instructions adapted to cause a 3D printer to print a support in accordance with any of claims 1 to 11.
